# EUROPEAN PATENT APPLICATION

(11) **EP 1 566 217 A2**
(43) Date of publication of application: **24.08.2005**
(21) Application number: 05003289.5
(22) Date of filing: 16.02.2005
(51) Int. Cl.: B01L 3/00, G01N 1/00, G01N 15/00

(54) **Chamber array arrangement**

(30) Priority: 20.02.2004 US 783409
(71) Applicant: EPPENDORF AG, 22339 Hamburg (DE)
(72) Inventor: Bülow, Sven, 22395 Hamburg (DE)
(74) Representative: Becker Kurig Straus

(57) **Abstract**

The present invention pertains to a chamber array arrangement comprising a container with at least two chambers, each of which contain a probe carrier in form of solid particles. The present invention also relates to a method for performing a screening assay using the chamber array arrangement.

## Description

### TECHNICAL AREA

The present invention pertains to a chamber array arrangement comprising a container with at least two chambers, each of which contain a probe carrier in form of solid particles. The present invention also relates to a method for performing a screening assay using the chamber array arrangement.

### BACKGROUND ART

In various fields of modem life sciences, biology, and chemistry, reactions on the basis of at least one solid particle attached reactant have become more and more important. Reactions on the basis of at least one reactant attached to a solid particle generically provide the advantage that target compounds will bind or adhere to the solid particle attached reactant and may be easily separated from a reaction mixture.

A drawback of such reactions is, however, that when more than one particular solid particle attached reactant is present, often labor intensive sample preparation and/or detection steps for isolating of identifying the reaction product(s) are necessary.

In order to allow an unambiguous identification of the reaction product(s) on the basis of more than one solid particle attached reactant, two basic approaches have been developed. According to a first approach, the several solid particle attached reactants, such as for example beads, may be fixed to the surface of a planar array. Such fixation of beads to an array restricts, however, the free mobility of the beads and limits the number of beads which may be present in such an array. According to the second approach, the solid particle and/or a reactant attached thereto are with one or more tag(s). Such a marking with tag(s) is, however, always associated either with additional work-steps and therefore with increased costs to separate different solid particles species according to e.g. size to unambiguously identify the bound species, or with additional cost for specialized equipment to distinguish different ratios of dye colors when the beads are labeled with a specific ratio of two different dyes and the sample molecules with a third dye.

Thus, there is a need in the art to provide an array arrangement, wherein solid particle attached reactants do not have to be fixed to a surface thereof and which arrangement allows that the solid particle attached reactants are essentially freely movable. In addition, such an array arrangement should also allow that solid particles and/or reactants attached thereto may be used which have not been marked with one or more additional tag(s). Moreover, such an array arrangement should be producible in high numbers and at essentially low costs and should permit to be used in at least partially automated detection and/or handling processes as e.g. known from high throughput screening. Furthermore, an array arrangement should be highly reliable and the risk for the occurrence of any mixing-ups due to the array arrangement should be as minimal as possible. If desired, an array arrangement should also be adaptable to standard reading and liquid handling devices designed for standard arrays of the state of the art.

This objective has been achieved by providing an array arrangement, comprising a container with at least two chambers, each chamber containing solid particles onto which a capture probe has been attached.

### SUMMARY OF THE INVENTION

The present invention provides a chamber array arrangement comprising a container with at least two chambers. The chambers may be filled with probe carriers in form of solid particles, which may freely float or be suspended or otherwise move about in the sample solution. The present arrangement allows to meet the contemporary needs of a user by assembling the desired array on site. The elements of the chamber array arrangement according to the present invention may be easily pre-fabricated and produced in large numbers and therefore may be provided at essentially low costs. If desired, a chamber array arrangement according to the present invention may be configured such that it allows the use of standard devices of the state of the art, designed e.g. for an application with standard 24, 96 or 384 well micro titer plates.

### BRIEF DESCRIPTION OF THE DRAWINGS

FIG. 1 shows a container of a chamber array arrangement according to the present invention provided with a cover.
FIG. 2 shows a container of a chamber array arrangement according to the present invention provided with a connecting means of the key-type.
FIG. 3 shows another embodiment of a container for a chamber array arrangement according to the present invention.

### DEFINITIONS

The term "array" as used in the present application shall be understood to comprise a collection of at least two chambers arranged in a spatially defined and physically addressable manner.

The term "probe" as used in the present application comprises any molecule that can be recognized by a particular target. Examples of probes include, but are not restricted to, oligonucleotides, nucleic acids, agonists and antagonists for cell membrane receptors, toxins and venoms, viral epitopes, hormones (e.g., opioid peptides, steroids, etc.), hormone receptors, peptides, enzymes, enzyme substrates, cofactors, drugs, lectins, sugars, oligosaccharides, proteins, and monoclonal antibodies.

The term "target" as used in the present application pertains to any molecule that has an affinity for a given probe.

The term "chamber" as used in the present application shall define any form of a compartment present in a container.

### DETAILED DESCRIPTION OF THE INVENTION

The present invention pertains to a chamber array arrangement comprising a container with at least two chambers, which chambers are adapted to receive a probe carrier in solid form.

In principle, the container is not restricted to any specific form and may have e.g. the form of a body having an essentially flat bottom surface, such as e.g. a cylinder or a cuboid, or may be in form of a body having an essentially non-flat bottom, such as e.g. a sphere, or a body similar to a test tube. In order to allow use of devices, the container may also have a form suitable for insertion into a micro titer plate, e.g. for a 96 or 384 well standard microtiter plate or may be integral part of such a multi-well plate. Containers dimensioned similar to or slightly smaller than the wells of standard array arrangements allow that already existing standard devices for fluid handling and analytic reading devices may be used or have to be modified slightly only. Alternatively, the container may also be adapted to be arranged on slides for microscopy.

Generally, the container may be prepared from any material or any combination of materials according to the general knowledge of a skilled person in the art considering the requirements to be met during the experiments, such as e.g. the specific solvents to be used, the planned temperature range for a specific reaction and the detection methods, in particular optical detection methods. For example, polymers already used for micro-titer plates including, for example, (poly)tetrafluoroethylene, (poly)vinylidenedifluoride, polypropylene, polystyrene, polycarbonate, or combinations thereof may be suitably used. In addition, the containers may also be made from e.g. glass, silicon, pyrolytic graphite, metal and/or metal alloys.

The container may also be made from a combination of materials, e.g. from a combination of a material providing a desired physical stability and strength together with a material providing desirable properties with respect to the premeditated detection method. When the detection method comprises sending a light beam through the bottom plate or membrane of said container and/or of the chambers formed therein, said bottom plate should be transparent to the wavelengths of light used. Preferably, the container is synthesized of a non-fluorescent plastic material, and is provided with an essentially circular bottom having a surface area which is smaller than the bottom surface area (or a respective cross-sectional area) of a well of a standard microtiter plate.

The inner surface of the container and/or the chambers defined therein may also be provided partially or completely with an additional substrate having favorable properties with respect to the intended use, such as e.g. polymers, gels, nourishing media, plastics, resins, polysaccharides, silica or silica-based materials, carbon, metals, inorganic glasses, membranes. Substrates transparent to light may be useful for specific optical detection methods.

The container comprises at least 2 chambers formed therein, preferably between 2 and 100 chambers, more preferred between three and 50, even more preferred between 4 or 6 and 24 chambers.

The at least 2 chambers in the container are separated from each other by means preventing passage of at least some of the compounds or substances or all, from one chamber to the other. Means envisaged in this respect are as e.g. walls or membranes made of partially permeable or non-permeable material(s), which material(s) may be either the same or different from the material the container is made from. According to a preferred embodiment the walls or membranes are made of a material that allows passage of the sample fluid, but not of the probe carrier.

In principle, the chamber may have any desired form, such as e.g. a parallelepiped or a cuboid form, the form of a cylinder, a cylinder sector or a test tube form, etc.. The form and the volume of a chamber may be chosen by a skilled person on basis of his general knowledge in the art and depending on the specific desired application. This variability provides the possibility that subsequently or in parallel corresponding tests on basis of different volumes of solvents, media or reagents may be performed. Such subsequent or parallel tests may be e.g. of high interest under the aspect of reaction kinetics, e.g. for enzymatic or catalytic processes, or for identifying effects due to a different dilution.

Depending on the desired application, additional operational means, in particular for performing or facilitating a chemical or biologic process, such as e.g. media, reagents, solvents, catalysts, coatings, may be present in one or more of the chamber(s).

The chamber array arrangement may also comprise a cover arranged on top of the container and/or on one or more of the at least two chambers of the container. The cover may have e.g. the form of a film or a membrane and may be provided so as to provide a sealing of the container's/chamber's interior vs. the environment, e.g. to prevent contamination of the substances present in the container/chambers or to prevent dropping-out or mixing of probe carriers or other substances. Another advantage of providing a cover resides in that it allows the presence of a protective atmosphere in the container/chambers, such as e.g. of a nitrogen or argon atmosphere, which may be desirable for storage and or the assay as such.

In principle, the cover may be made from a non-bonding material retaining said probe carriers(s) in their respective chambers and may have the form of a membrane or fabric having a pore size smaller than the probe attached to the probe carrier means or the free probe: In particular, the Eppendorf plate sealer may be suitably used as a membrane. Also, a semi-permeable membrane may be applied on the container, which enables target molecules to enter the container and the respective chambers in said container according to the principles of dialysis, when said membrane/container is brought into contact with an appropriate fluid.

To this end, the container may be submerged in a fluid of interest comprising a potential target compound. The semi-permeable membrane is permeable for both, the solvent and for molecules of low molecular weight, but will not be permeable for the probe carrier in the container. As will be appreciated, a chamber array arrangement provided with a semi-permeable membrane will be of interest for various analytic purposes, in particular for assays involving measurements in an equilibrium state or in case of the presence of a comparatively low binding affinity between probe and target. Moreover, proceeding accordingly may also be of use, when comparing the affinity of a specific target molecule with respect to different probes present in different chambers of an array arrangement according to the present invention.

Alternatively, selected substances (the sample) may be also be added through the cover by means of e.g. a syringe perforating the cover, in particular a self-resealing cover. In addition, the cover may also be removed before using the chamber array arrangement and the selected substances, e.g. the sample may be added.

The container may either be provided with the probe carriers already included or the user may add probe carriers on site, i.e. before performing the assay, into the chambers. In both cases, the user is in a position to assemble an array containing desired probes on site. Since the container does provide a limited number of chambers only, the user may select a number of prefilled containers, that provide the probes required for performing the assay, without having to use a huge number of probes that are not of real interest. Alternatively, the user may also fill the chambers of the container with pre-fabricated probe carriers according to the current interest.

In order to carry out the present invention, the probe carrier means should be able to essentially freely float in a solution contained in/added to the respective chamber, which enables the probe to readily contact a specific target. To this end, the probe carrier may be made from,any material conventionally used for this purpose and is preferably selected from the group consisting of glasses, gel, silicon, silica, metal, plastics, such as e.g. polystyrene, Wang resin (4-(hydroxymethyl)phenoxymethylcopoly(styrene--1% divinylbenzene (DVB) resin), cellulose, dextran cross-linked with epichlorohydrin (such as e.g. Sephadex), and agarose (such as e.g. Sepharose) or mixtures thereof prepared in a format selected from the group of slides, discs, layers, beads, capillaries, plates, combs or pins.

To these carriers selected probes are attached, which may be achieved according to any method known in the art. In particular, the probe may be directly attached to the carrier means or via a spacer.

In principle, but depending on the specific application aimed at by a user, not more than one probe, i.e. one kind of probe carrier will be present in a given chamber of the container, such allowing an immediate determination of a positive or negative result for the give probe. Alternatively, more than one probe carrier may be included in a chamber, which provides the advantage that a larger number of probes may be scanned with respect to a given target, yet requires that the probes present in the pool have to screened again in case a positive result has been detected in a particular chamber. Alternatively, the probes or their carriers may be provided with additional tags or markers allowing a more detailed identification if desired by a user.

The chamber array arrangement according to the present invention may further comprise a carrier having a location adapted to receive said container. In order to enable a fixed orientation of the container on or in said carrier, the container and/or the carrier may be provided with connecting means arranged on or formed in at least one of the container's external walls and on or in the corresponding carrier element at or near the location, where the container is to be arranged, allowing a predetermined and unchangeable orientation of the container on/in the carrier. As a result, the different chambers of the container may be read automatically, since the assay results achieved with the different probe carriers may be attributed to the respective chambers.

Any pair of connecting means allowing an unambiguous, fixed and unchangeable orientation of the container in or on the carrier may be envisaged. To this end, the connecting means may be designed in form of a key-lock type means arranged on or formed in the container external wall(s), and in or on the carrier, respectively, which has an asymmetric structure such that the container may be attached to the carrier in one direction only. For example, an asymmetric structure or form may be achieved when said connecting means comprises two differently shaped arms, a lever with an asymmetric structure or parts provided with different structures on their surface.

The carrier element for the chamber array arrangement is not restricted to any specific form. For example, the carrier element may be provided in form of a microplate having a plurality of wells which can be arranged in a variety of ways. For example, a carrier element can have the general size and shape of a standard-sized microtiter plate with 96 wells (normally arranged in a format of 8 x 12 rows/columns). According to the specific application aimed at by the user, also microtiter plates having a different design may be developed as carrier elements. The carrier element may e.g. also have the form of hybridization frames arranged on a slide. Moreover, a carrier may have container receiving locations of any desired form, such as e.g. container receiving locations in form of regular and irregular polygons or in oval form, which container receiving locations can match with correspondingly shaped containers.

In principle, the carrier element may be made from any material or any combination of materials according to the general knowledge of a skilled person in the art. In case of a carrier of a microtiter plate type, polymers already used for microtiter plates including, for example, (poly)tetrafluoroethylene, (poly)vinylidenedifluoride, polypropylene, polystyrene, polycarbonate, or combinations thereof may be used. In case of a carrier of a slide type, any materials for slides known in the art may be used, such as e.g. glass, plastics, silicon, pyrolytic graphite, metal and/or metal alloys. When the carrier is used for an assay which is to be performed by sending a light beam through the bottom of the plate, the body of the plate should be transparent to the wavelengths of light used or should be provided with an opening on the bottom of the plate. The carrier element may comprise any number of container receiving locations, for example between 1 and 1000 container receiving locations, preferably between 2 and 400 container receiving locations, more preferably 24, 96 or 384 container receiving locations.

Moreover, carriers of the present invention may be provided with means providing the possibility of coupling carriers together in order to obtain larger carrier elements.

The chamber array arrangement may be used together with devices for handling fluids, in particular for adding and removing fluids, and reading devices as known in the state of the art.

The present invention also provides a method for performing an assay and detecting the presence of a target in a sample in a qualitative and/or quantitative manner, said method comprising the steps of providing a sample comprising a potential target compound; providing a container having at least two chambers, wherein in a particular chamber at least one probe carrier is present, and wherein a probe carrier is essentially freely moveable in said chamber; introducing a sample, containing a potential target compound, into a chamber; contacting the probe carrier means with the biological sample; and detecting a binding between said potential target compound and the probe.

The step of introducing the sample into a chamber may be performed by introducing said potential target compound through a semi-permeable membrane. This may be achieved for example by submerging a container of a chamber array arrangement according to the present invention into a fluid comprising the sample/the target compound.

The method according to the present invention has provided particularly good results when the probe has been selected from the group consisting of DNA, RNA, and proteins.

A chamber array arrangement of the present invention may be used for performing a detection reaction, in particular a detection reaction selected from the group consisting of DNA detection reaction, RNA detection reaction, protein detection reaction, and antibody-based detection reaction, in particular in the low density range.

### DESCRIPTION OF THE CURRENTLY PREFERRED EMBODIMENTS

The present invention will now be described in detail on the basis of the following nonlimiting examples given by way of an example only.

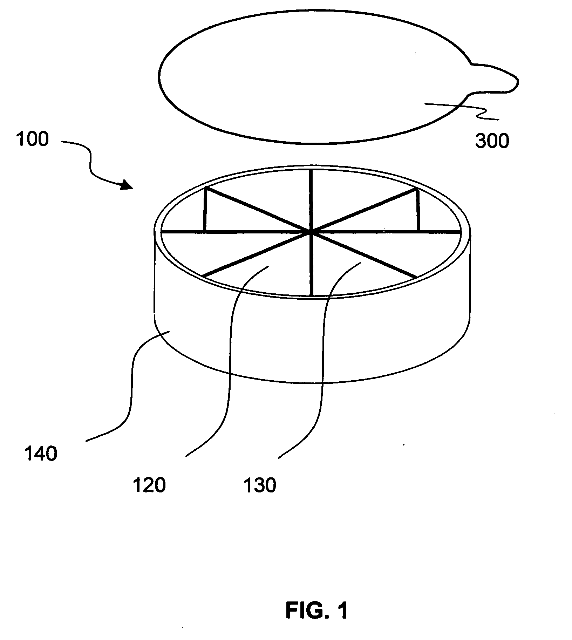

FIG. 1 shows a container 100 of a chamber array arrangement according to the present invention. Container 100 is of an essentially cylindrical shape and comprises eight chambers 120 dividing container 100 into eight sectors of essentially similar size. Chambers 120 are separated from one another by walls 130. Container 100 and walls 130 are integrally molded and are made from polypropylene. Each chamber 120 will be filled with one probe composition, namely one type of covalently avidin-coupled polystyrene beads of 0.7 - 0.9 µm diameter, to which a specific biotinylated oligonucleotide is attached via the high affinity binding of biotin to avidin.).

After the filling of chambers 120 with the respective beads, a cover 300 is welded on container 100. Cover 300 is made of a polyester/polypropylene laminate membrane (e.g. cat. no. 0030 127.650 supplied by Eppendorf AG, Hamburg, Germany).

Subsequently, the beads will be subjected to a desired reaction, such as hybridization of a target polynucleotide to the oligonucleotide attached to the bead(s). For this purpose the necessary reagents, e.g. a cDNA population generated by reverse transcription from the mRNA isolated from a treated mammalian cell line, will be introduced by means of a syringe in the respective chamber. If necessary, the container may be incubated at a required temperature or subjected to temperature protocols.

After the desired reaction has been finished, the beads, which beads comprise in case of a positive reaction a target-probe complex, may be isolated or preferably subjected to an in situ detection in the chambers.

Three general further proceeding possibilities are given. First, the membrane may be penetrated e.g. by means of a liquid handling robot and the beads present in each chamber may be transferred separately to a detection device of the state of the art, such as e.g. a flow cytometer (such as model FACS Calibur II, available from BD Biosciences, San Jose, CA). Alternatively, the cover can be removed and the beads can be isolated e.g. by means of a pipette, and then transferred to a detection device of the state of the art as indicated above. According to a third preferred approach, the results are determined *in situ* by means of appropriate detection devices, such as e.g. conventional microplate readers, said detection devices reading each chamber separately, whether a positive reaction has occurred or not and, if applicable, quantifying the binding event.

According to another embodiment, cover 300 fixed on container 100 is made of a semi-permeable membrane allowing entry of molecules and small particles of a restricted size only, i.e. of molecules or particles having a size of up to 0.1 µm diameter , (e.g. a membrane of hydrophilic polyethersulfone, available from suppliers such as Pall Gelman, Glen Cove, NY). into the container and its chambers. A such covered container of a chamber array arrangement may be simply submerged into a fluid comprising a target molecule. After an appropriate period of time, the container will be removed from said fluid and subjected to detection reactions as lined out above.

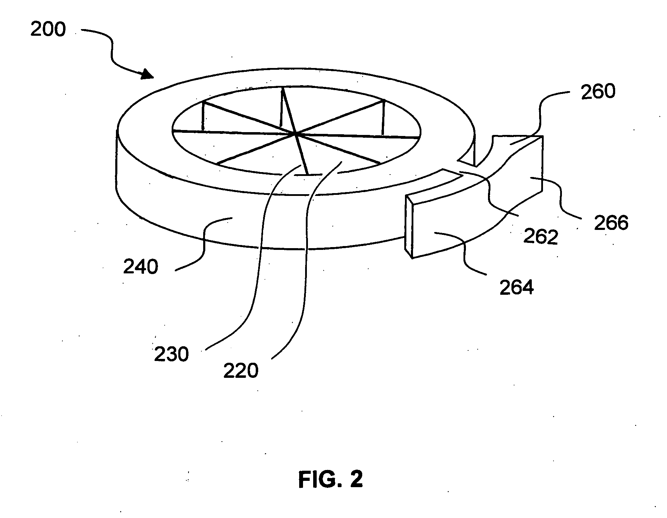

FIG. 2 shows a container 200 in form of an insert which may be arranged in a carrier element of the microtiter plate type. On the external side wall 240 a key-type connecting means 260 is formed. The connecting means comprises two arms 264, 266 and a web 262 connected to said arms 264, 266 which serves as a spacer between the arms 264, 266 and external side wall 240. The arms 264, 266 serve as a grip during the insertion of the container in a carrier (similar to a 96-well standard microtiter plate) and permit that a user will not come into contact with chambers 220 and help thereby to omit a contamination of chambers 220 with external material. During insertion, a cover is applied on container 200. Container 200 is made of plastics, such as polypropylene. Container 200 has a diameter which would permit an insertion into a well of a 96-well standard plate and its diameter is thus slightly smaller than the internal diameter of such a standard well (6.3 mm), for example about 6.0 mm.

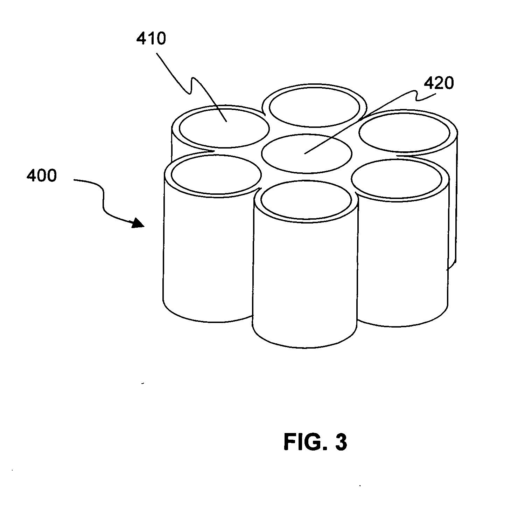

FIG. 3 shows another embodiment for a container for a chamber array arrangement according to the present invention. A container 400 comprises six outer well chambers 410 and one inner well chamber 420. The outer wells 410 and the inner well 420 are essentially in form of cylinders having openings at their upper side, on which openings a cover can be applied.

## Claims

1. A chamber array arrangement for performing screening assays comprising:
a container comprising at least two chambers,
wherein in a particular chamber at least one probe carrier is present, wherein the probe carrier is essentially freely movable in said particular chamber.

2. The chamber array arrangement according to claim 1, said chamber array arrangement further comprising a cover arranged on one or more of said at least two chambers.

3. The chamber array arrangement according to claim 2, said cover being made from a non-bonding material and allowing to retain said probe or probe pool essentially completely in the respective chamber.

4. The chamber array arrangement according to claim 3, said cover being a membrane having a pore size smaller than the size of the probe carrier means with the probe attached or of the free probe.

5. The chamber array arrangement according to claim 2, said cover being removable and/or penetrable.

6. The chamber array arrangement according to claim 1, said chamber array arrangement further comprising a carrier having a location adapted to receive said container.

7. A method of detecting a target in a sample comprising the steps of:
providing a sample of interest comprising a potential target compound;
providing a container having at least two chambers, wherein in a particular chamber at least one probe carrier is present, which carrier is essentially freely movable in said chamber;
introducing a sample containing a potential target compound into a chamber;
performing the assay; and
detecting, whether a binding of the target to the probe has occurred or not, and, if applicable, quantifying the binding event.

8. The method according to claims 7 or 8, wherein said step of introducing a sample into a chamber is performed by introducing the sample through a membrane, preferably through a semi-permeable membrane.

9. The method according to claim 7, wherein said probe is selected from the group consisting of DNA, RNA, and proteins.
